Europäisches Patentamt

European Patent Office

Office européen des brevets

(19)

(11) Veröffentlichungsnummer: **0 090 903**

**A1**

(12) **EUROPÄISCHE PATENTANMELDUNG**

(21) Anmeldenummer: 82710018.1

(22) Anmeldetag: 01.04.82

(51) Int. Cl.³: **F 16 D 23/12**

(43) Veröffentlichungstag der Anmeldung:
12.10.83 Patentblatt 83.41

(84) Benannte Vertragsstaaten:
AT BE CH DE FR GB IT LI LU NL SE

(71) Anmelder: LOSENHAUSEN Maschinenbau AG
Schlüterstrasse 13-19
D-4000 Düsseldorf(DE)

(72) Erfinder: Bartels, Manfred
Rembrandtstrasse 3
D-4156 Willich 3(DE)

(54) Trockenschaltkupplung.

(57) Bei einer Trockenschaltkupplung bei welcher ein Abtriebsglied (14) drehbar auf einem Nabenteil (10) gelagert ist und durch einen Schaltring (36) ein unverdrehbar auf dem Nabenteil (10) sitzender Kupplungskörper (20) mit einer Kupplungsfläche (22) gegen eine Kupplungsfläche (24) des Abtriebsglieds (14) axial bewegbar ist, wird der Schaltring (36) über einen Stellhebel (58) und einen Stellzug (42) von einem Schalthebel (48) betätigt. Eine Schraubenfeder (68) umgibt den Stellzug (42). Sie stützt sich an einem gerätefesten Widerlager (66) ab und wirkt auf eine mit der Seele (46) des Stellzugs (42) verbundene Druckplatte (56). Die Seele (46) ist einerseits mit dem Schalthebel (48) und andererseits mit dem Stellhebel (58) verbunden.

Fig. 1

EP 0 090 903 A1

Patentanmeldung


Losenhausen Maschinenbau AG, Schlüterstr. 13-19,
D-4000 Düsseldorf 1


Trockenschaltkupplung


Die Erfindung betrifft eine Trockenschaltkupplung
enthaltend einen Nabenteil, der fest mit einer Antriebswelle verbindbar ist, ein Abtriebsglied, das drehbar
auf dem Nabenteil gelagert ist und eine erste Kupplungsfläche aufweist, einen Schaltkörper, der auf dem
Nabenteil axial verschiebbar geführt ist und eine mit
der ersten Kupplungsfläche zusammenwirkende zweite
Kupplungsfläche aufweist, Geradführungsmittel, welche
eine Relativverdrehung zwischen Schaltkörper und Nabenteil verhindern, einen Schaltring, der drehbar auf dem
Schaltkörper gelagert und zur Übertragung einer axialen
Ein- und Ausrückbewegung mit dem Schaltkörper
gekuppelt ist, eine Stellvorrichtung, welche an dem Schaltring angreift und durch welche der Schaltring axial bewegbar ist und federnde Mittel, durch welche der Schaltkörper in Einrückrichtung vorbelastet ist.

Eine solche Trockenschaltkupplung wird beispielsweise benutzt, um bei Vibrations-Baumaschinen den Vibrationsantrieb ein- oder auszuschalten.

Bei einer bekannten Trockenschaltkupplung dieser Art ist ein fest mit der Antriebswelle verkeilter Nabenteil vorgesehen. Auf dem Nabenteil ist der Schaltkörper axial verschiebbar geführt. Geradführungsmittel, welche eine Relativverdrehung zwischen Schaltkörper und Nabenteil verhindern sind dort von einer Keilführung gebildet. Ein Abtriebsglied in Form einer Riemenscheibe ist über ein Kugellager drehbar auf dem Nabenteil gelagert. Er weist eine konische erste Kupplungsfläche auf. Der Schaltkörper besitzt eine dazu komplementäre konische Kupplungsfläche. Durch eine Einrückbewegung kann die Kupplungsfläche des Schaltkörpers an die Kupplungsfläche des Abtriebsglieds angelegt werden. Auf dem Schaltkörper ist ein Schaltring über ein Kugellager gelagert. Der Schaltring ist über eine Verstellgabel axial zwischen einer eingerückten und einer ausgerückten Stellung beweglich. Die axiale Ein- und Ausrückbewegung wird über das Kugellager auf den Schaltkörper übertragen, wobei dessen Kupplungsfläche an die Kupplungsfläche des Abtriebsglieds angelegt oder von dieser gelöst wird. Auf dem Nabenteil sitzt ein Ring, in dessen axialen Sacklochbohrungen vorgespannte Druckfedern angeordnet sind. Die Druckfedern drücken über einen auf dem Nabenteil geführten Druckring gegen den inneren Laufring des Kugellagers. Bei der Ausrückbewegung legt sich der Druckring gegen den die Federn enthaltenden Ring an und begrenzt damit die Ausrückbewegung.

Durch den Ring mit den Federn werden die axialen Abmessungen der Trockenschaltkupplung in unerwünschter Weise vergrößert. Dabei tritt noch folgendes Problem auf: Durch Verschleiß der Kupplungsflächen kann der zum Einrücken der Kupplung erforderliche Hub sich wesentlich vergrößern, und zwar insbesondere auch wegen der konischen Form der Kupplungsflächen. Die in dem Ring untergebrachten Federn können dann einen sicheren Kontakt der Kupplungsflächen nicht mehr gewährleisten, wodurch Schlupf und weiterer Verschleiß eintritt. Einer Ausbildung der Federn derart, daß stehts ein einwandfreier Kontakt der Kupplungsflächen in der eingerückten Stellung gewährleistet ist, steht die Forderung nach möglichst geringen Axialabmessungen der Trockenschaltkupplung entgegen.

Der Erfindung liegt die Aufgabe zugrunde, die axialen Abmessungen einer Trockenschaltkupplung der eingangs definierten Art möglichst gering zu halten.

Efindungsgemäß wird diese Aufgabe dadurch gelöst, daß die federnden Mittel an der Stellvorrichtung angreifen.

Die federnden Mittel, durch welche der Schaltkörper in Einrückrichtung vorbelastet ist, sitzen nicht mehr an den Nabenteil, etwa in dem Ring der vorstehend beschriebenen bekannten Trockenschaltkupplung, sondern greifen an der Stellvorrichtung an. Der Ring mit den Druckfedern auf dem Nabenteil und der Druckring können daher im Vergleich zu der geschilderten vorbekannten Kupplung entfallen, wodurch die axialen Abmessungen entsprechend verringert werden.

Es ergeben sich noch weitere Vorteile:

Da die axialen Abmessungen der Trockenschaltkupplung durch die federnden Mittel nicht beeinflußt werden, dann eine hinreichend lange vorgespannte Feder
benutzt werden, die auch bei einem Verschleiß der
Kupplungsflächen und einer entsprechenden Änderung
des Hubs bei der Einrückbewegung einen sicheren
Andruck der Kupplungsflächen gewährleistet.

Bei der vorstehend geschilderten bekannten Kupplung
dient das Kugellager, über welches der Schaltring auf
dem Schaltkörper gelagert ist, gleichzeitig dazu
die axialen Schaltbewegungen des Schaltrings auf den
Schaltkörper zu übertragen. Dazu ist das Kugellager
in der Lage, obwohl seine axiale Belastbarkeit
begrenzt ist. Wenn bei der bekannten Trockenschaltkupplung die Kupplung ausgerückt wird, dann liegt der
innere Laufring des Kugellagers über den Druckring
an dem die Federn enthaltenden Ring an. Die in
Ausrückrichtung vom Benutzer auf den Schaltring ausgeübte axiale Kraft ist nicht kontrolliert oder begrenzt.
Es kann daher auf das Kugellager eine axiale Belastung
wirksam werden, die zu einer Überlastung und Zerstörung
des Kugellagers führt. Diese Möglichkeit wird bei der
erfindungsgemäßen Konstruktion vermieden.

Ausgestaltungen der Erfindung sind Gegenstand der
Unteransprüche. Ein Ausführungsbeispiel der Erfindung
ist nachstehend unter Bezugnahme auf die zugehörigen
Zeichnungen näher erläutert:

      Fig. 1     zeigt eine Trockenschaltkupplung mit
                 der zugehörigen Stellvorrichtung in
                 vereinfachter Darstellung.

      Fig. 2     zeigt eine Abwandlung der Stellvorrich-
                 tung.

Die Trockenschaltkupplung enthält einen Nabenteil 10, der fest mit einer Antriebswelle 12 verbindbar ist. Ein Abtriebsglied 14 in Form einer Riemenscheibe ist über Kugellager 16 drehbar auf dem Nabenteil 10 gelagert. Das Abtriebsglied 14 weist eine erste, konisch nach außen verlaufende Kupplungsfläche 18 auf. Ein Schaltkörper 20 ist auf dem Nabenteil 10 axial verschiebbar geführt. Der Schaltkörper 20 weist eine mit einem Kupplungsbelag 22 versehene, mit der ersten Kupplungsfläche 18 zusammenwirkende zweite Kupplungsfläche 24 auf.

Als Geradführungsmittel, welche eine Relativverdrehung zwischen Schaltkörper 20 und Nabenteil 10 verhindern, sind an dem Schaltkörper 20 axiale Mitnahmebolzen 26 angebracht, die in Bohrungen 28 des Nabenteils 10 geführt sind. Die Bohrungen 28 sind in einem Flansch 30 des Nabenteils 10 gebildet. In den Bohrungen 28 sitzen selbstschmierende Büchsen 32, in denen die Mitnahmebolzen 26 gleiten. Der Schaltkörper 20 ist auf dem Nabenteil 10 mittels einer korrosionsgeschützten Gleitpassung 34 geführt.

Auf dem Schaltkörper 20 ist ein Schaltring 36 über ein Kugellager 38 drehbar gelagert und zur Übertragung einer axialen Ein- und Ausrückbewegung mit dem Schaltkörper 20 gekuppelt. Dabei ist die axiale Ein- und Ausrückbewegung von dem Schaltring 36 über das Kugellager 38 auf den Schaltkörper 20 übertragbar. An dem Schaltring 36 greift eine Stellvorrichtung 40 an, durch welche der Schaltring 36 axial bewegbar ist. Durch federnde Mittel ist der Schaltkörper 20 in Einrückrichtung vorbelastet. Diese federnden Mittel greifen an der Stellvorrichtung 40 an.

Bei der dargestellten Ausführung enthält die Stellvorrichtung 40 einen Stellzug 42 mit einem gerätefest gehaltenen Mantel 44 und einer Seele 46. Die Seele ist einerseits mit einem Schalthebel 48 verbunden und andererseits mit dem Schaltring 36 gekuppelt. Der Schalthebel 48 ist um einen Schwenkpunkt 50 verschwenkbar. Die Seele 46 ist in einem Punkt 52 an dem Schalthebel 48 angelenkt. Am anderen Ende der Seele 46 sitzt ein Kopf 54 mit einer Druckplatte 56. Der Kopf 54 ist mit dem Schaltring 36 über einen Stellhebel 58 gekuppelt, der in einem gerätefesten Schwenklager 60 gelagert ist. Der Mantel 44 des Stellzugs ist zwischen gerätefesten Haltern 62 und 64 gehalten. An dem Mantel 44 sitzt ein Widerlager 66. Die federnden Mittel sind von einer vorgespannten, relativ langen Schraubenfeder 68 gebildet, welche den Stellzug 42 umgibt, an dem mit dem Mantel 44 verbundenen Widerlager 66 abgestützt ist und an der mit der Seele 46 verbundenen Druckplatte 56 anliegt.

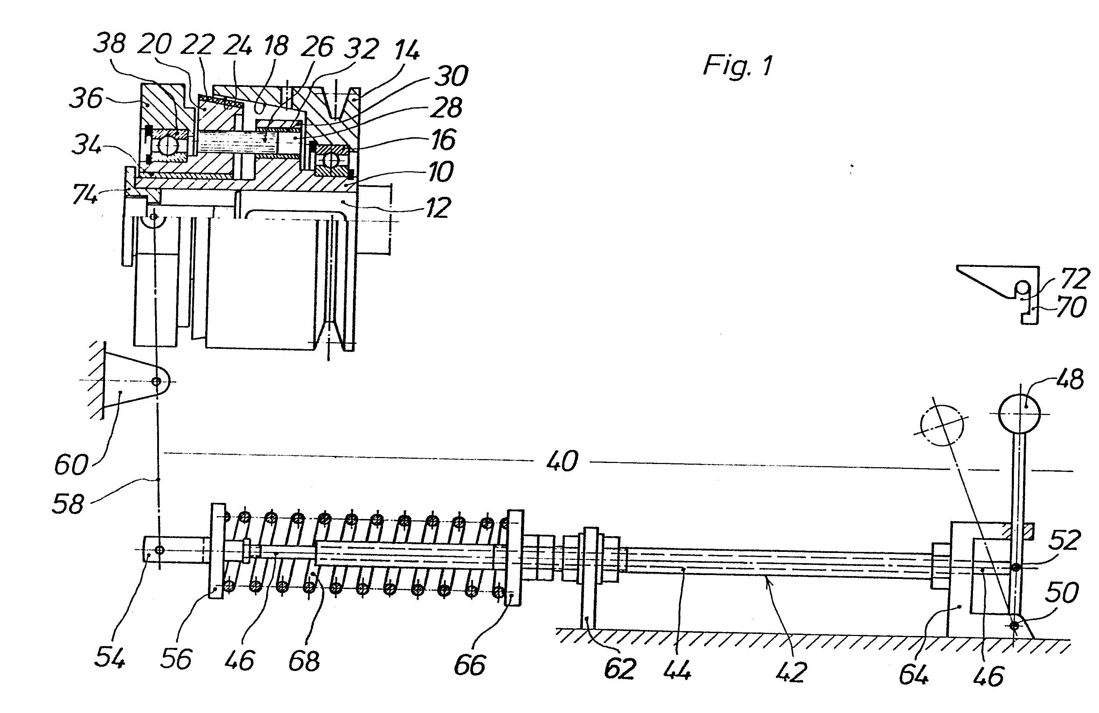

Die Bewegung des Schalthebels 48 im Uhrzeigersinn ist durch einen Anschlag 70 begrenzt. In der Anschlagstellung ist der Schalthebel 48 in einen Rastausschnitt 72 einrastbar. Wie in Fig. 1 erkennbar ist, ist bei dieser Stellung des Schalthebels 48 der Schaltkörper 20 über den Stellring 36 und das Kugellager 38 gegen die Wirkung der Feder 68 in ausgerückter Stellung gehalten.

Die beschriebene Anordnung arbeitet wie folgt:

Um die Trockenschaltkupplung einzurücken, wird der Schalthebel 48 aus dem Rastausschnitt 72 herausgezogen und in die in Fig. 1 gestrichelt dargestellte Stellung verschwenkt. Die Seele 46 steht unter dem Einfluß der vorgespannten Schraubenfeder 68, welche den Kopf 54 über die Druckplatte 56 nach links in Fig. 1 zu verschieben trachtet. Dadurch wird der Schalthebel 48 entgegen dem Uhrzeigersinn verschwenkt und der Stellhebel 58 wird im Uhrzeigersinn verschwenkt, wobei über den Schaltring 36 und das Kugellager 38 der Schaltkörper 20 nach rechts verschoben wird, bis die zweite Kupplungsfläche 24 mit dem Kupplungsbelag 22 an der ersten Kupplungsfläche 18 anliegt. Wenn sich durch Verschleiß an den Kupplungsflächen 18,24 und des Kupplungsbelags 22 der zum Einrücken der Kupplung erforderliche Hub verändert, so hat dies praktisch keinen Einfluß auf die wirksame Anlagekraft, da hierdurch die Länge der vorgespannten, relativ langen Feder 68 nur unwesentlich beeinflußt wird.

Zum Ausrücken der Trockenschaltkupplung wird der Schalthebel 48 in die dargestellte Lage nach rechts verschwenkt. Hierdurch wird über die Druckplatte 56 die Schraubenfeder 68 zusammengedrückt und die Seele 46 des Stellzugs 42 nach rechts gezogen. Dadurch erfolgt eine Verschwenkung des Stellhebels 58 entgegen dem Uhrzeigersinn, was zu einer Bewegung des Schaltkörpers 20 nach links in Fig. 1 in die dargestellte Lage führt.

Es ist zu beachten, das in dieser Stellung das Kugellager 38 nicht durch axiale Kräfte belastet ist, wie dies bei der oben diskutierten bekannten Konstruktion der Fall ist.

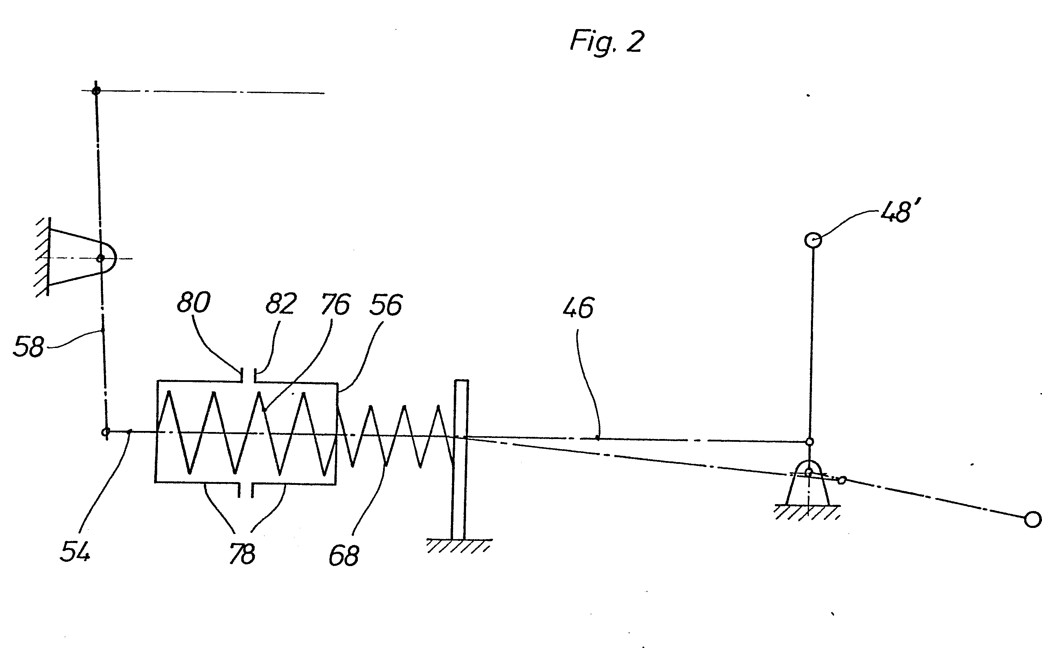

Allerdings wird dabei die ausgerückte Stellung des Schaltkörpers 20 durch die Anlage des Schalthebels 48 an dem Anschlag 70 bestimmt. Die ausgerückte Stellung des Schaltkörpers 20 hängt daher von der Länge der Seele 46 des Stellzugs 42 ab. Statt dessen kann aber auch der Schaltkörper 20 in der ausgerückten Stellung gegen einen Anschlag bewegt werden, der in der dargestellten Ausführungsform von einem Bund 74 in Fig. 1 gebildet ist. Eine Anordnung, wie sie in Fig. 2 schematisch dargestellt ist, begrenzt dann die axial zwischen dem Schaltring 36 und dem Schaltkörper 20 wirksame, das Kugellager 38 belastende Kraft und gestattet gleichzeitig eine Bewegung des Schalthebels 48 in seiner Einraststellung.

Bei der Ausführung nach Fig. 2 ist zwischen der Druckplatte 56, an welcher die Schraubenfeder 68 anliegt, und dem Kopf 54 eine Zugfeder 76 vorgesehen. Die Zugfeder sitzt in einer geteilten Federbüchse 78, deren beide Teile mit Flanschen 80 bzw. 82 aneinander anliegen.

In Wirkrichtung der Schraubenfeder 68, also beim Einrücken der Trockenschaltkupplung ist die Federbüchse 78 starr. Flansch 82 liegt an Flansch 80 an, und der Hub der Druckplatte 56 wird voll auf den Kopf 54 und den Stellhebel 58 übertragen. Beim Ausrücken der Trockenschaltkupplung, wenn also der Schalthebel 48 im Uhrzeigersinn verschwenkt und die Seele 46 nach rechts in Fig. 2 gezogen wird, ist die an dem Stellhebel 58 und damit an dem Schaltring 36 wirksame Kraft begrenzt auf die Zugkraft der Zugfeder 76. Dadurch kann eine Überlastung des Kugellagers 38 verhindert werden. Es kann auch unabhängig von der genauen gegenseitigen Lage der Anschläge 70 und 74 und der Länge der Seele 46 der Schalthebel 48 in seine Raststellung gebracht werden.

Es ist auch möglich, wie in Fig. 2 gestrichelt dargestellt ist, den Schalthebel als Kniehebel auszubilden, der bis über einen Totpunkt verschwenkt wird.

<u>Patentansprüche</u>

1. Trockenschaltkupplung enthaltend einen Nabenteil (10), der fest mit einer Antriebswelle (12) verbindbar ist, ein Abtriebsglied (14), das drehbar auf dem Nabenteil (10) gelagert ist und eine erste Kupplungsfläche (18) aufweist, einen Schaltkörper (20), der auf dem Nabenteil (10) axial verschiebbar geführt ist und eine mit der ersten Kupplungsfläche (18) zusammenwirkende zweite Kupplungsfläche (24) aufweist, Geradführungsmittel (26,28,32), welche eine Relativverdrehung zwischen Schaltkörper (20) und Nabenteil (10) verhindern, einen Schaltring (36), der drehbar auf dem Schaltkörper (20) gelagert und zur Übertragung einer axialen Ein- und Ausrückbewegung mit dem Schaltkörper (20) gekuppelt ist, eine Stellvorrichtung (40), welche an dem Schaltring angreift und durch welche der Schaltring (36) axial bewegbar ist und federnde Mittel (68), durch welche der Schaltkörper (20) in Einrückrichtung vorbelastet ist, dadurch gekennzeichnet, daß die federnden Mittel (68) an der Stellvorrichtung (40) angreifen.

2. Trockenschaltkupplung nach Anspruch 1, dadurch gekennzeichnet, daß der Schaltring (36) über ein Kugellager (38) auf dem Schaltkörper (20) gelagert ist, wobei die axiale Ein- und Ausrückbewegung über das Kugellager (38) auf den Schaltkörper (20) übertragbar ist.

3. Trockenschaltkupplung nach Anspruch 2, dadurch gekennzeichnet, daß die Stellvorrichtung (40) einen Stellzug (42) mit einem gerätefest - gehaltenen Mantel (44) und einer einerseits mit einem Schalthebel (48) verbundenen und andererseits mit dem Schaltring (36) gekuppelten Seele (46) enthält, und daß die federnden Mittel von einer vorgespannten Schraubenfeder (68) gebildet sind, welche den Stellzug umgibt, an einem mit dem Mantel (44) verbundenen Widerlager (66) abgestützt ist und an einer mit der Seele (46) verbundenen Druckplatte (56) anliegt.

4. Trockenschaltkupplung nach Anspruch 3, dadurch gekennzeichnet, daß der Schalthebel (48) in einer Stellung einrastbar ist, in welcher der Stellzug (42) den Schaltkörper (20) über den Schaltring (36) und das Kugellager (38) gegen die Wirkung der Schraubenfeder (68) in ausgerückter Stellung hält.

5. Trockenschaltkupplung nach einem der Ansprüche 1 bis 4, dadurch gekennzeichnet, daß als Geradführungsmittel an dem Schaltkörper (20) axiale Mitnahmebolzen (26) angebracht sind, die in Bohrungen (28) des Nabenteils (10) geführt sind.

6. Trockenschaltkupplung nach Anspruch 5, dadurch in den Bohrungen (28) des Nabenteils (10) selbstschmierende Büchsen (32) sitzen, in denen die Mitnahmebolzen gleiten.

7. Trockenschaltkupplung nach Anspruch 5 oder 6, dadurch gekennzeichnet, daß der Schaltkörper (20) auf dem Nabenteil (10) mittels einer korrosionsgeschützten Gleitpassung (34) geführt ist.

8.  Trockenschaltkupplung nach Anspruch 3, dadurch gekennzeichnet, daß zwischen der Druckplatte (56) und dem Schaltring (36) zugkraftbegrenzende Mittel (76) eingeschaltet sind.

9.  Trockenschaltkupplung nach Anspruch 8, dadurch gekennzeichnet, daß die Ausrückbewegung des Schaltkörpers (20) durch einen am Nabenteil (10) sitzenden Anschlag (74) begrenzt ist und die zugkraftbegrenzenden Mittel einen Längenausgleich der Stellvorrichtung (40) gestatten.

10. Trockenschaltkupplung nach Anspruch 9, dadurch gekennzeichnet, daß die Stellvorrichtung (40) einen als Kniehebel ausgebildeten Schalthebel (48') enthält.

Fig. 1

Fig. 2

58   80   82   76   56   46   48'

54   78   68

2/2

0090903

Europäisches
Patentamt

EUROPÄISCHER RECHERCHENBERICHT

Nummer der Anmeldung

0090903

EP 82 71 0018.1

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 1 423 108 (J.A. HEANY) <br> * ganzes Dokument * <br> -- | 1,2 |
| A | US - A - 2 903 911 (L.R. HUSSA) <br> * Spalte 1, Zeile 36 bis Spalte 2, Zeile 21 ; Fig. 3 * <br> -- | 1,2 |
| A | AT - B - 6 940 (S.A. DES ANCIENS ETABLISSEMENT PANHARD ET LEVASSOR) <br> * Seite 1, Zeile 30 bis Seite 2, Zeile 19 ; Fig. 1 * <br> -- | 1,5 |
| A | FR - A - 501 007 (R. LEUMANN) <br> ---- | |

**KLASSIFIKATION DER ANMELDUNG (Int Cl³)**

F 16 D 23/12

**RECHERCHIERTE SACHGEBIETE (Int. Cl.³)**

F 16 D 13/00
F 16 D 23/00
F 16 H 7/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Berlin | 03-11-1982 | LEMBLE |

EPA form 1503.1  06.78